(19) Europäisches Patentamt
European Patent Office
Office européen des brevets

(11) EP 2 946 004 B1

(12) **FASCICULE DE BREVET EUROPEEN**

(45) Date de publication et mention de la délivrance du brevet:
**08.03.2023 Bulletin 2023/10**

(21) Numéro de dépôt: **14701694.3**

(22) Date de dépôt: **17.01.2014**

(51) Classification Internationale des Brevets (IPC):
***C11D 3/00*** *(2006.01)* ***A47L 1/15*** *(2006.01)*
***C03C 17/30*** *(2006.01)* ***C11D 11/00*** *(2006.01)*
***C11D 17/04*** *(2006.01)* ***G02B 1/10*** *(2006.01)*
***G02C 7/02*** *(2006.01)*

(52) Classification Coopérative des Brevets (CPC):
**C11D 3/0078; A47L 1/15; C11D 11/0029; C11D 17/049; G02B 27/0006; G02C 13/006**

(86) Numéro de dépôt international:
**PCT/EP2014/050887**

(87) Numéro de publication internationale:
**WO 2014/111513 (24.07.2014 Gazette 2014/30)**

(54) **LINGETTE SECHE A ACTION ANTIBUEE ET/OU NETTOYANTE**

TROCKENWISCHTUCH MIT ENTNEBELUNGS- UND/ODER REINIGUNGSWIRKUNG

DRY WIPE WITH DEMISTING AND/OR CLEANING ACTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.01.2013 FR 1350459**

(43) Date de publication de la demande:
**25.11.2015 Bulletin 2015/48**

(73) Titulaire: **Satisloh AG**
**6340 Baar (CH)**

(72) Inventeurs:
- **CADET, Mamonjy**
  **F-94220 Charenton Le Pont (FR)**
- **CRETIER, Annette**
  **F-94220 Charenton Le Pont (FR)**

(74) Mandataire: **Jacobacci Coralis Harle**
**32, rue de l'Arcade**
**75008 Paris (FR)**

(56) Documents cités:
**WO-A1-02/00819** **WO-A1-2005/108543**
**WO-A1-2013/013929** **US-A1- 2005 113 277**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 946 004 B1

## Description

La présente invention concerne des lingettes sèches obtenues par imprégnation d'un tissu en microfibres par un composé tensioactif, capables de conférer à une surface des propriétés antibuée par simple essuyage de ladite surface, via un transfert dudit tensioactif sur la surface essuyée. Ces lingettes offrent également une action nettoyante de la surface traitée.

De nombreux supports, tels que des matières plastiques et le verre, présentent l'inconvénient de se recouvrir de buée lorsque la température de leur surface descend au-dessous du point de rosée de l'air ambiant, par condensation de minuscules gouttelettes d'eau sur ce support. C'est le cas notamment du verre que l'on utilise pour former des vitrages pour véhicules de transport ou le bâtiment, des verres de lunettes, des lentilles, des miroirs et des optiques d'appareil photo. La formation de buée sur ces surfaces entraîne une diminution de la transparence, due à la diffusion de la lumière par les gouttes d'eau, ce qui peut provoquer une gêne importante, en particulier dans des situations où une excellente visibilité est essentielle.

Pour éviter la formation de buée dans un environnement très humide, on a proposé de déposer sur la surface externe du support sur lequel on cherche à supprimer l'occurrence de l'apparition de la buée des revêtements polymères hydrophiles, ayant un faible angle de contact statique avec l'eau permettant de faciliter le mouillage de la surface externe par l'eau, de façon à former un film d'eau continu très fin donnant une sensation de transparence.

Ces revêtements antibuée dits permanents sont généralement constitués d'espèces très hydrophiles telles que des sulfonates ou des polyuréthanes. Par revêtement antibuée permanent, on entend un revêtement dont les propriétés antibuée découlent de composés hydrophiles liés de façon permanente au support, et ne nécesssitent pas de traitements par des agents antibuée à intervalles réguliers pour régénérer l'effet antibuée.

Les produits commerciaux correspondant à ces verres antibuée permanents comportent généralement des couches hydrophiles de plusieurs micromètres d'épaisseur. D'une part la transparence de ces produits est affectée par une telle couche hydrophile, d'autre part, ces revêtements épais, par suite de l'absorption d'eau, gonflent, se ramollissent et deviennent moins résistants mécaniquement. Par ailleurs, on observe progressivement une détérioration des propriétés antibuée en raison notamment de pollution par des poussières, traces de doigts ou autres matières grasses. Ceci oblige à nettoyer relativement fréquemment les surfaces traitées pour restaurer les propriétés antibuée.

Des propriétés antibuée temporaires peuvent aussi être obtenues en appliquant sur des supports tels que des verres de lunettes des solutions hydrophiles aqueuses ou alcooliques commerciales contenant un ou plusieurs agents antibuée (généralement des tensioactifs), disponibles sous forme de sprays ou de lingettes qui ont été préalablement imprégnées. Elles permettent d'obtenir sur une courte période de temps des propriétés antibuée par simple pulvérisation ou essuyage de la surface à traiter.

Ces formulations peuvent être appliquées sur des substrats comportant en tant que couche externe un revêtement antisalissure (hydrophobe et/ou oléophobe), souvent considéré comme indispensable dans le cas où le substrat est un verre ophtalmique disposant d'un revêtement antireflet. Les verres de lunettes ainsi traités présentent de mauvaises propriétés antibuée.

Ces formulations peuvent être appliquées plus avantageusement à la surface de substrats comportant en tant que couche externe un revêtement hydrophile précurseur d'un revêtement antibuée, de façon à former un revêtement antibuée temporaire.

La demande de brevet internationale WO 2011/080472, au nom du demandeur, décrit un verre de lunettes comprenant un substrat revêtu d'un revêtement comportant à sa surface des groupes silanols et, en contact direct avec ce revêtement, un revêtement précurseur d'un revêtement antibuée qui :

- est obtenu par greffage d'au moins un composé organosilane possédant un groupe polyoxyalkylène comprenant moins de 80 atomes de carbone, et au moins un atome de silicium porteur d'au moins un groupe hydrolysable,
- a une épaisseur généralement inférieure ou égale à 5 nm, et
- possède un angle de contact statique avec l'eau supérieur à 10° et inférieur à 50°.

La demande de brevet WO 2013/013929, au nom du demandeur, décrit un revêtement antibuée temporaire, obtenu par application à la surface du revêtement précurseur d'un film d'une composition de tensioactif.contenant au moins un tensioactif répondant à la formule $F(CF_2)_y\text{-}(CH_2CH_2O)\text{-}(CH_2\text{-}CH_2O)_xH$ (VIII) dans laquelle x est un entier variant de 1 à 14, y est un entier inférieur ou égal à 10, les composés de formule (VIII) pour lesquels y= 6 représentant au moins 90 % en masse des composés de formule (VIII) présents dans la composition. La composition est appliqué directement sous forme liquide sur le revêtement précurseur ou au moyen de lingettes sèches ou humides comprenant ladite composition.

Il est connu d'utiliser des lingettes humides imprégnées d'une solution liquide de tensioactif pour usage antibuée. L'inconvénient des lingettes humides est que leur réutilisation est limitée et qu'elles doivent être conservées dans un conditionnement étanche.

La demande internationale WO 2005/108543 décrit des lingettes antibuée réutilisables sèches, c'est-à-dire présentant un aspect sec au toucher, comprenant une surface textile imprégnée de 10 à 35 % en masse de divers tensioactifs liquides. Le textile peut être réalisé en fibres artificielles ou naturelles ou en microfibres.

La demande JP 2009/195648 décrit un textile antibuée sec non tissé et

1) imprégné d'une solution contenant un mélange d'un tensioactif fluoré cationique et d'un tensioactif fluoré non ionique.
2) contenant des fibres éclatées et des fibres non éclatés, les fibres éclatées étant de préférence des microfibres.

Outre ses propriétés antibuée, ce textile spécifique non tissé, imprégné de la composition de tensioactifs ci-dessus est décrit comme exerçant une action additionnelle nettoyante pour un verre comportant en surface un matériau hydrophobe fluoré. Le document JP 2009/195648 indique que le textile non tissé imprégné est capable d'éliminer des gouttes d'eau si elles sont présentes à la surface de verres de lunettes.

Les performances de ce textile sont susceptibles d'être améliorées.

La présente invention se propose de fournir des solutions aux problèmes techniques connus dans le domaine du traitement antibuée ou du nettoyage de substrats, qui sont généralement des substrats transparents ou réfléchissants.

Ainsi, un objectif de l'invention est de fournir une lingette réutilisable capable de prévenir la formation de buée sur une surface transparente ou réfléchissante, préférentiellement un article d'optique, en particulier une lentille ophtalmique. Cette lingette se doit d'impartir des propriétés antibuée dont la persistance dans le temps est élevée, des propriétés qui doivent être obtenues rapidement, c'est-à-dire par le biais d'un faible nombre d'applications de l'agent antibuée à la surface de l'article, sans entraîner d'altération de la visibilité.

Un autre objectif de l'invention est de fournir une lingette réutilisable à propriétés améliorées par rapport aux lingettes existantes pour le nettoyage de salissures, en particulier de salissures de type sébum.

Les deux objectifs ci-dessus peuvent être atteints séparément ou en combinaison au moyen d'une lingette sèche comprenant un tissu en microfibres tissé ou tricoté comprenant des microfibres de polymère hydrophile et des microfibres de polymère lipophile, imprégné d'au moins un tensioactif ayant un équilibre hydrophile/lipophile (HLB) $\geq 5$, la lingette ne comprenant pas un tissu en microfibres sec obtenu par i) imprégnation d'un tissu en microfibres comprenant des microfibres faites de polymères ou de mélanges de polymères comprenant des unités polyester et des unités polyamide, avec une composition de tensioactif contenant au moins un tensioactif de formule $F(CF_2)_y-(CH_2-CH_2O)_{x+1}H$ (VIII), dans laquelle x est un entier variant de 1 à 14, y est un entier inférieur ou égal à 10, les composés de formule (VIII) pour lesquels y= 6 représentant au moins 90% en masse des composés de formule (VIII) présents dans la composition, puis ii) séchage de ce tissu en microfibres, et la lingette ne comprenant pas un tissu en microfibres sec obtenu par i) imprégnation d'un tissu en microfibres comprenant des microfibres faites de polymères ou de mélanges de polymères comprenant des unités polyester et des unités polyamide, avec une composition de tensioactif contenant au moins un tensioactif de formule $F(CF_2)_y-(CH_2-CH_2O)_{x+1}H$ (VIII), dans laquelle x est un entier variant de 2 à 14, y est un entier inférieur ou égal à 10, les composés de formule (VIII) pour lesquels y= 6 représentant au moins 90% en masse des composés de formule (VIII) présents dans la composition, puis ii) séchage de ce tissu en microfibres.

L'invention sera décrite plus en détail en référence aux dessins annexés, dans lesquels les figures 1 à 3 présentent les performances à l'essuyage sur diverses surfaces, hydrophiles ou hydrophobes, de lingettes selon l'invention, constituées de tissu Cémoi™ imprégné de tensioactifs.

Le tensioactif utilisé pour imprégner la lingette selon l'invention présente impérativement un équilibre hydrophile/lipophile (HLB) $\geq 5$, lequel est de préférence inférieur ou égal à 18, mieux inférieur ou égal à 16 et encore mieux inférieur ou égal à 15, de façon à bénéficier de propriétés antibuée optimales. Le terme équilibre hydrophile/lipophile (en anglais HLB, pour "Hydrophilic Lipophilic Balance") est bien connu de l'homme du métier et représente une grandeur caractéristique d'un tensioactif, qui est d'autant plus grande que la solubilité dans l'eau du tensioactif est élevée. Dans la présente demande, on prendra en compte la valeur théorique (calculée) de l'équilibre hydrophile/lipophile.

Pour les tensioactifs non ioniques, on utilisera la méthode de calcul définie dans la publication de W. C. Griffin, J. Soc. Cosm. Chem. 1954 (Vol. 5), pages 249-256, à savoir HLB= 20 x Mh/M, formule dans laquelle Mh est la masse moléculaire de la portion hydrophile de la molécule et M est la masse moléculaire totale de la molécule donnant un résultat sur une échelle de 0 à 20. Une valeur de HLB de 0 calculée selon la méthode de Griffin correspond à une molécule complètement lipophile/hydrophobe, et une valeur de 20 correspond à une molécule complètement hydrophile/lipophobe.

Pour les tensioactifs anioniques, on utilisera la méthode de calcul définie dans la publication Davies J. T. « A Quantitative Kinetic Theory of Emulsion type. I. Physical Chemistry of the Emulsifying Agent. » Gas/liquid and Liquid/liquid interfaces. Proceedings of the International Congress of surface activity (1957) 426-438, à savoir HLB=7+m x Hh - n x Hl, formule dans laquelle m désigne le nombre de groupes hydrophiles dans la molécule, Hh la valeur des groupes hydrophiles, n le nombre de groupes lipophiles dans la molécule, Hl la valeur des groupes hydrophiles.

Pour les tensioactifs cationiques, on utilisera la méthode définie dans la publication de Z. E.Proverbio, S. M.

Bardavid, E. L. Arancibia, P. C. Schulz « Hydrophile-lipophile balance and solubility parameter of cationic surfactants » Colloids and Surfaces A : Physicochem. Eng. Aspects 214 (2003) 167-171.

Dans le cadre de l'invention, le tensioactif employé, qui peut notamment remplir le rôle d'agent antibuée, peut être un tensioactif cationique, anionique, non ionique ou amphotère, de préférence non ionique.

Le tensioactif est de préférence un tensioactif liquide, terme par lequel on entend un tensioactif dont la température de fusion est inférieure à 35°C sous pression atmosphérique.

De préférence, il ne présente pas un phénomène d'évaporation trop marqué ni d'odeur désagréable, ne confère pas à la lingette un toucher gras ni ne modifie son aspect de manière défavorable, ne génère pas de défauts optiques ou cosmétiques sur la surface traitée, et n'est pas toxique, étant donné que les lingettes de l'invention sont généralement manipulées à mains nues et/ou à proximité de l'oeil, notamment dans le cas où elles sont destinées à traiter une surface optique telle que la surface d'un verre de lunettes.

Il comporte de préférence un groupe polyoxyalkylène ayant préférentiellement plus de 6 unités oxyalkylène, mieux un groupe polyoxyéthylène possédant idéalement plus de 6 unités oxyéthylène.

Les monoéthers d'alkyle de polyéthylène glycols (A) représentent une première catégorie de tensioactifs préférés. Ils sont de préférence non fluorés. Parmi ceux-ci, on préfèrera utiliser ceux de formule :

$$H(OCH_2CH_2)_nOR^1 \qquad (II)$$

dans laquelle $R^1$ est un groupe alkyle, linéaire ou ramifié, éventuellement substitué par un ou plusieurs groupes fonctionnels, et pouvant comporter en outre une ou plusieurs doubles liaisons, et n est un entier de 1 à 25, de préférence de 2 à 20, mieux de 2 à 15 encore mieux de 4 à 15, et idéalement de 8 à 12. n peut notamment prendre les valeurs 2, 4, 5, 10, ou 20. Selon un mode de réalisation particulier, n est supérieur à 6. Selon un autre mode de réalisation particulier, n est inférieur à 20, mieux inférieur à 15.

$R^1$ est de préférence un groupe alkyle linéaire comprenant de préférence 10 à 20 atomes de carbone, mieux un groupe alkyle linéaire saturé. Des exemples non limitatifs de groupes $R^1$ utilisables sont les groupes dodécyle ($C_{12}H_{25}$), cétyle ($C_{16}H_{33}$), stéaryle ($C_{18}H_{37}$) et oléyle ($C_{18}H_{35}$). Selon un mode de réalisation particulier, le groupe $R^1$ compte 12 atomes de carbone ou moins.

Les tensioactifs de formule (II) ont de préférence une masse molaire de 180 à 1500 g/mol, mieux de 300 à 1000 g/mol et encore mieux de 350 à 800 g/mol.

Des composés de formule (II) utilisables dans la présente invention sont commercialisés par Croda sous la marque Brij®, par exemple les Brij® portant les numéros suivants : C10, L4, C20, S10. Parmi eux, le Brij® C10 (HLB = 12-13) est préféré (composé de formule II avec n = 10 et $R^1$ = n- $C_6H_{13}$).

Les tensioactifs possédant un cycle sorbitane (B) représentent une seconde catégorie de tensioactifs préférés. Parmi ceux-ci, on préfèrera utiliser ceux dont le cycle sorbitane possède n de ses quatre groupes hydroxyle fonctionnalisés avec des groupes polyoxyalkylène à terminaisons OH identiques ou différents (de préférence des groupes polyoxyéthylène), et p de ses quatre groupes hydroxyle fonctionnalisés avec des groupes $R^1$ identiques ou différents de formule : $-(R_dO)_z-(Y)_{n2}-R'$ dans laquelle $R_d$ est un groupe alkylène linéaire ou ramifié, z est un entier $\geq 1$, Y est un groupe divalent, n2 représente 0 ou 1 (de préférence, n2 = 1) et R' est un groupe hydrocarboné saturé ayant de 12 à 19 atomes de carbone, de préférence de 13 à 19, n et p étant des entiers tels que n = 2 ou 3 et p = 1 ou 2, avec n + p = 4. De préférence, n = 3 et/ou p = 1.

$R_d$ représente de préférence un groupe alkylène en C2-C6 tel que les groupes propylène ou éthylène, idéalement le groupe éthylène.

L'entier z varie de préférence de 1 à 40, mieux de 2 à 20, encore mieux de 2 à 10.

Les groupes polyoxyalkylène à terminaisons OH de ces composés comprennent de préférence de 1 à 40 groupes oxyalkylène, mieux de 2 à 20, encore mieux de 2 à 10.

Le nombre total de groupes oxyalkylène présents dans la structure des tensioactifs (B) varie de préférence de 4 à 40, mieux de 8 à 30, encore mieux de 15 à 25, et est idéalement égal à 20.

R' est un groupe hydrocarboné saturé ayant de préférence de 14 à 18 atomes de carbone, mieux de 15 to 17. R' est de préférence un groupe alkyle linéaire. R' est de préférence un groupe n-$C_{15}H_{31}$ ou n-$C_{17}H_{35}$.

Des exemples non limitatifs de groupes Y sont les groupes alkylène, cycloalkylène, arylène, carbonyle, amido, ou les combinaisons de ces groupes, linéaires ou ramifiés, optionnellement substitués. Y est de préférence un groupe carbonyle.

Le groupe $-(Y)_{n2}-R'$ est de préférence un groupe palmityle ou un groupe stéaryle.

Les tensioactifs (B) sont de préférence non-ioniques et sont de préférence des esters d'acide gras de polyoxyalkylène sorbitanes, c'est-à-dire des sorbitanes polyoxyalkylénés estérifiés une ou deux fois par un acide gras (Y = carbonyle et n2 = 1), de préférence une seule fois. Mieux, les tensioactifs (B) sont des esters d'acide gras de polyoxyéthylène sorbitanes (Y = carbonyle, n2 = 1 et R = $CH_2CH_2$), en d'autre termes des polysorbates avec des longueurs de chaînes spécifiques pour le groupe ester.

Une classe préférée de tensioactifs (B) comprend les composés de formule (IX):

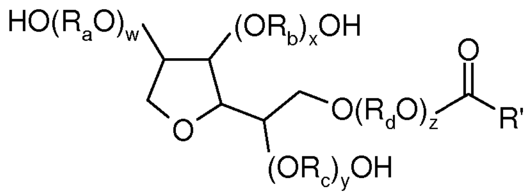

(IX)

dans laquelle $R_a$, $R_b$, $R_c$ et $R_d$ représentent indépendamment des groupes alkylène linéaires ou ramifiés, de préférence linéaires, de préférence des groupes alkylène en C2-C6 tels que les groupes propylène ou éthylène, w, x, y et z représentent indépendamment des entiers $\geq 1$, de préférence allant de 1 à 40, mieux de 2 à 20, encore mieux de 2 à 10, et R' est tel que défini précédemment.

De préférence, w+x+y+z varie de 4 à 40, mieux de 8 à 30, encore mieux de 15 à 25. Idéalement, w+x+y+z = 20.

Parmi les tensioactifs (B) de formule (IX), on préfèrera utiliser les composés polyéthoxylés de formule (X):

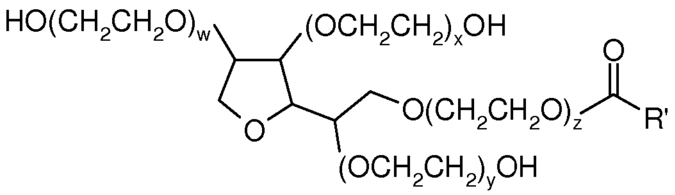

(X)

dans laquelle w, x, y, z et R' sont tels que définis précédemment.

Les tensioactifs (B) peuvent être facilement synthétisés ou sont disponibles dans le commerce. En particulier, les tensioactifs (B) de formule IX ou X sont vendus sous les marques Alkest™, Canarcel™ ou Tween™.

Les tensioactifs (B) préférés sont le Tween™ 40 (HLB = 15,6), également connu sous le nom de monopalmitate de polyoxyéthylène (20) sorbitane (composé de formule X dans laquelle R' = $C_{15}H_{31}$ et w+x+y+z = 20), le Tween™ 60, également connu sous le nom de monostéarate de polyoxyéthylène (20) sorbitane (composé de formule X dans laquelle R' = $C_{17}H_{35}$ et w+x+y+z = 20), le Tween™ 20 et le Tween™ 80.

D'autres tensioactifs utilisables sont les copolymères triblocs comprenant deux blocs d'oxyde d'éthylène (EO) et un bloc central d'oxyde de propylène (PPO), dits "poloxamères", commercialisés notamment par BASF sous la dénomination Pluronic®, et notés $(EO)_x$-$(PO)_y$-$(EO)_z$ ou $HO(CH_2CH_2O)_x$-$(CH_2CH(CH_3)O)_y$-$(CH_2CH_2O)_zH$, par exemple les Pluronic® P-123, L-121, P-65, P-64.

D'autres tensioactifs utilisables selon l'invention sont les tensioactifs de nature fluoroalkyle polyéthoxylés, préférentiellement de formule $F(CF_2)_y$-$(CH_2$-$CH_2O)_{x+i}H$ (VIII), dans laquelle x et y sont des entiers tels que x varie de 1 à 16 et y est inférieur ou égal à 10.

Parmi ces tensioactifs fluorés, on pourra notamment utiliser le Capstone® FS 3100, le Capstone® FS30, le Capstone® FS 31, le Capstone® FS 34, le Masurf FS 1700, le Masurf FS 1800, le Masurf 2800, le Masurf 2900, le Zonyl® FSO 100 et le Zonyl® FSN 100.

Le Capstone® FS 3100 est un tensioactif comprenant un mélange de composés ayant des longueurs de chaînes polyéthoxylées variables répondant à la formule générale $F(CF_2)_y$-$(CH_2$-$CH_2O)_{X+1}H$ (VIII) dont plus de 90% en masse correspond à la fraction y=6 , x étant un entier variant de 1 à 14. Le Capstone® FS3100 contient des teneurs indétectables par HPLC de composé de formule (VIII) dans laquelle y est supérieur à 6. Il est biodégradable.

Le Zonyl® FSO 100 (HLB = 9,1), commercialisé par Dupont, lequel est un mélange de composés de formule $F(CF_2)_y$-$(CH_2$-$CH_2O)_{x+i}H$ (VIII) dans laquelle y prend les valeurs 6, 8 et 10 dans les proportions massiques respectives de l'ordre de 65%, 30%, 5% et x est un entier variant de 2 à 13.

Selon un mode de réalisation, le tensioactif employé pour imprégner le tissu contient au moins une unité siloxane Si-O et présente en outre une tension superficielle inférieure à 40 mN/m, mieux inférieure à 35 mN/m. Un exemple d'un tel tensioactif est le composé Coatosil 77 commercialisé par Momentive (anciennement Silwet 77, présentant une tension superficielle de 20,5 mN/m), dont la formule est la suivante, n étant égal à 7,5 :

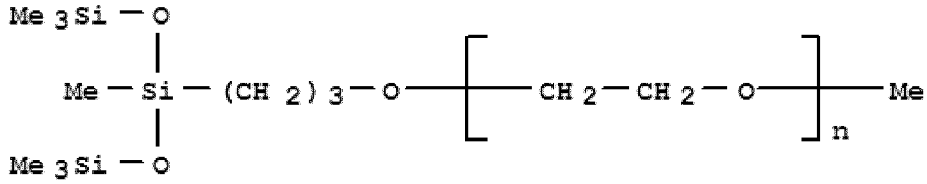

La tension superficielle du tensioactif exprimée en mN/m est obtenue selon la méthode de la plaque de Wilhelmy : la tension superficielle se mesure pour une solution à 0,1% en masse (solvant : eau). On tire hors du liquide une plaque verticale tout en mesurant la force exercée. On note la valeur de la force d'arrachement de la plaque juste avant que le ménisque se détache. On divise la force ainsi obtenue par la largeur de la plaque, et on obtient la valeur de la tension superficielle. L'angle de contact (0°) entre le liquide et la surface de la plaque doit être garanti par un nettoyage intensif, par exemple par calcination du corps de mesure.

Selon un mode de réalisation, le tensioactif employé n'est pas de nature polysiloxane (silicone).

Les tensioactifs envisagés ci-dessus peuvent être utilisés seuls ou en mélange avec un ou plusieurs autres tensioactifs, pour autant que les caractéristiques du mélange considéré restent compatibles avec les propriétés requises des lingettes selon l'invention. De préférence, les tensioactifs ayant un équilibre hydrophile/lipophile < 5 représentent moins de 10 % de la masse de tensioactifs imprégnant le tissu en microfibres, mieux moins de 5 % et encore mieux 0 %. De préférence, les tensioactifs ayant un équilibre hydrophile/lipophile > 18 représentent moins de 10 % de la masse de tensioactifs imprégnant le tissu en microfibres, mieux moins de 5 % et encore mieux 0 %.

Des exemples de tensioactifs ne possédant pas un équilibre hydrophile/lipophile (HLB) ≥ 5 sont le Brij S2, le Brij 93 et le Pluronic L-81.

La lingette selon l'invention comprend de préférence de 5 à 40 % en masse de tensioactifs imprégnés par rapport à la masse du tissu en microfibres non imprégné, de préférence de 10 à 40% en masse, mieux de 15 % à 35 % en masse, encore mieux de 20 à 35 % en masse, et de façon optimale de 20 à 30 % en masse.

Les performances antibuée et/ou nettoyantes des lingettes selon la présente invention dépendent également de la nature du tissu ou textile formant ladite lingette. Ainsi, le tissu doit avantageusement posséder un fort pouvoir absorbant, ce qui peut être traduit par une surface spécifique massique de brins élevée pour garantir notamment une bonne qualité d'essuyage, et donc un faible diamètre moyen des brins. En outre, plus le tissu est absorbant, plus la quantité d'agent antibuée imprégné est élevé, et plus la performance antibuée est durable.

De préférence, les tensioactifs de formule $F(CF_2)_y$-$(CH_2$-$CH_2O)_{x+i}H$ (VIII), dans laquelle x est un entier variant de 1 à 14, y est un entier inférieur ou égal à 10, les composés de formule (VIII) pour lesquels y= 6 représentant au moins 90% en masse des composés de formule (VIII) présents, représentent moins de 10 % de la masse de tensioactifs imprégnant le tissu en microfibres, mieux moins de 5 % et encore mieux 0 %. De préférence, les tensioactifs de formule $F(CF_2)_y$-$(CH_2$-$CH_2O)_{x+1}H$ (VIII), dans laquelle x est un entier variant de 2 à 14, y est un entier inférieur ou égal à 10, les composés de formule (VIII) pour lesquels y= 6 représentant au moins 90% en masse des composés de formule (VIII) présents, représentent moins de 10 % de la masse de tensioactifs imprégnant le tissu en microfibres, mieux moins de 5 % et encore mieux 0 %. Selon un mode de réalisation de l'invention, les tensioactifs fluorés représentent moins de 10 % de la masse de tensioactifs imprégnant le tissu en microfibres, mieux moins de 5 % et encore mieux 0 %.

Selon un autre mode de réalisation de l'invention, les tensioactifs de formule $F(CF_2)_y$-$(CH_2$-$CH_2O)_{x+1}H$ (VIII), dans laquelle x est un entier variant de 1 à 14, y est un entier inférieur ou égal à 10, représentent moins de 10 % de la masse de tensioactifs imprégnant le tissu en microfibres, mieux moins de 5 % et encore mieux 0 %.

De préférence, la lingette selon l'invention ne comprend pas un tissu Cémoi™ sec imprégné du tensioactif Zonyl® FSO 100.

Le tissu imprégné de tensioactif selon l'invention est un tissu en microfibres tissé ou tricoté, de préférence tricoté.

Ainsi qu'on le sait, un matériau tissé est obtenu par entrecroisement de façon perpendiculaire de deux ensembles de fils dans le sens longitudinal (chaîne) et dans le sens transversal (trame), alors qu'un matériau non tissé est une feuille manufacturée constituée de voiles ou de nappes de fibres orientées ou non , liées par friction, cohésion et/ou adhésion.

Un tissu tricoté est obtenu par enroulage en boucle d'un ou plusieurs fils pour former des mailles entrelacées les unes dans les autres.

Selon l'invention, on utilise préférentiellement un tissu tricoté avec un nombre de mailles/$cm^2$ d'au moins 300, de préférence au moins 400, mieux au moins 500, mieux encore supérieur à 700. La gamme optimale pour le nombre de mailles/$cm^2$ est supérieure à 800 et mieux encore supérieure à 900 mailles/$cm^2$. En tant que de besoin, l'homme du métier se référera à la norme NF EN 14971, relative à cette caractéristique de l'invention.

Le tissu utilisé dans l'invention comprend de préférence au moins 80% en masse de microfibres, mieux au moins 90% en masse de microfibres, de préférence au moins 95% en masse, mieux 100 % en masse de microfibres. Par microfibres, on entend des fibres textiles dont la masse linéique est inférieure à 1,3 décitex (1,3g /10 km). Les

microfibres préférées ont une masse linéique inférieure à 1 décitex.

Le tissu en microfibres comprend selon l'invention des microfibres de polymère hydrophile et des microfibres de polymère lipophile,

Les microfibres de polymère hydrophile présentent une affinité pour l'eau, alors que les microfibres de polymère lipophile présentent une affinité pour les huiles.

Le polymère lipophile présente des affinités avec les salissures de type sébum, alors que le polymère hydrophile présente une affinité vis-à-vis de l'humidité présente à la surface du substrat traité par la lingette, de préférence un verre ophtalmique.

Un polymère hydrophile utilisé préférentiellement est un polymère capable d'un taux de reprise en eau supérieur ou égal à 2%, mieux supérieur ou égal à 3%.

Le taux de reprise en eau est le rapport entre la masse conditionnée d'un échantillon (après 24 heures à 20°C et 65% de taux d'humidité ambiante) et la masse anhydre obtenue en étuve à 105°C+/- 2°C (séchage jusqu'à l'obtention d'une masse constante).

La mesure de reprise en eau est connue de l'homme du métier qui pourra se référer, en tant que de besoin à la norme EN ISO6741.

Il est préférable que le taux de reprise en eau du polymère hydrophile soit inférieur à 10%, mieux inférieur à 8% et mieux encore inférieur ou égal à 7%.

Un polymère lipophile utilisé préférentiellement présente un taux de reprise en eau inférieur à 2%, mieux inférieur à 1,5% et mieux encore inférieur à 1%.

Les polymères hydrophiles préférés sont les polyamides 6.6 (taux de reprise en eau (TRE) de 2,5 à 6%), les polyamides 6 (TRE de 5,75%), les celluloses (TRE de 8% à 13%).

Les polymères lipophiles préférés sont les polyesters (TRE de 0,15% à 0,50%) et les polypropylènes (TRE de 0,05% à 0,50%).

Bien que les lingettes selon l'invention renferment des quantités élevées de tensioactifs, la structure en microfibres lipophile/hydrophile permet de réguler la quantité de tensioactif déposé sur la surface à traiter en évitant un excès de dépôt qui pourrait générer un défaut cosmétique rédhibitoire pour l'utilisateur.

Le tissu en microfibres comprend de préférence des microfibres de polyamide et des microfibres de polyester, mieux de 60 à 85 % en masse de microfibres de polyester et de 15 à 40 % en masse de microfibres de polyamide. Un exemple d'un tel tissu est le tissu Cémoi™, composé de 69,5 % en masse de microfibres de polyester et de 30,5 % en masse de microfibres de polyamide. Un tissu composé de 79 % en masse de microfibres de polyester et de 21 % en masse de microfibres de polyamide, fourni par la société Kelnet, est également approprié.

Préférentiellement, le tissu en microfibres comprend majoritairement des microfibres de section triangulaire. Préférentiellement, au moins 80 % en nombre des microfibres de polymère lipophile sont de section triangulaire.

Les microfibres utilisées dans l'invention peuvent être obtenues par éclatement de fibres, préférentiellement de structure dite en "quartiers d'orange", les quartiers d'orange étant constitués préférentiellement de polymère lipophile. Ainsi, selon un mode de réalisation préférentiel, les microfibres sont obtenues à partir de fibres de structure composite de polymère hydrophile et lipophile, par éclatement de ladite structure composite, après tissage ou tricotage.

L'invention concerne également un procédé de préparation d'une lingette telle que décrite ci-dessus, comprenant :

- l'imprégnation d'un tissu en microfibres tissé ou tricoté par une solution comprenant au moins un solvant et au moins un tensioactif ayant un équilibre hydrophile/lipophile (HLB) ≥ 5,
- le séchage du textile imprégné de façon à éliminer ledit solvant.

Le tensioactif sera généralement dissous dans une solution aqueuse, alcoolique ou hydro-alcoolique, voire dans un autre solvant organique approprié, pour parvenir à un bain de tensioactif contenant typiquement 0,1 à 50 % en masse de tensioactif, de préférence 1 à 10 %, tout en évitant de former des agrégats de type micelles. L'étape d'imprégnation peut être réalisée par toute technique appropriée bien connue de l'homme du métier, notamment par foulardage, pulvérisation, trempage, ou en utilisant des tampons d'imprégnation.

L'étape de séchage consistera généralement en un séchage thermique à une température allant de 60 à 200°C, de préférence de 80 à 150°C, destinée à éliminer la totalité ou la quasi-totalité du solvant utilisé dans la composition de surfactant pour réaliser l'imprégnation tout en évitant ou en limitant au maximum l'évaporation du tensioactif imprégné. A l'issue de cette étape, on obtient une lingette dite sèche, c'est-à-dire présentant un aspect sec au toucher, bien qu'elle soit imprégnée de tensioactif et que des traces de solvant puissent éventuellement subsister.

Les lingettes sèches ainsi obtenues sont capables de dispenser de façon efficace le tensioactif à la surface d'un substrat, par simple essuyage de la surface à traiter (mouvements de va et vient en translation et/ou rotation), et ce rapidement puisque le nombre d'essuyages nécessaire pour obtenir une propriété antibuée durable est limité. Il a de plus été constaté qu'une lingette selon l'invention imprégnée de 30 % en masse de tensioactif conférait des propriétés

antibuée à des verres même après 3000 sollicitations d'essuyage.

La lingette peut en outre conserver sa fonction première, qui est celle d'essuyer la salissure sur un substrat.

La présente invention concerne également un procédé pour impartir des propriétés antibuée à un article possédant une surface externe hydrophile, comprenant l'application d'un tensioactif sur ladite surface externe hydrophile, par essuyage de cette surface au moyen d'une lingette sèche telle que définie dans la présente description. Par « surface hydrophile », on entend une surface ayant un angle de contact statique avec l'eau inférieur à 50°, de préférence inférieur à 35°. Selon l'invention, les angles de contact sont mesurés conformément à la méthode présentée dans la demande WO 2008/053020.

La surface externe hydrophile traitée par la lingette comporte de préférence des groupes polyoxyalkylène, ladite surface ayant préférentiellement été obtenue par greffage d'au moins un composé organosilane possédant un groupe polyoxyalkylène, comprenant de préférence moins de 80 atomes de carbone, et au moins un atome de silicium porteur d'au moins un groupe hydrolysable.

Cette surface externe hydrophile peut notamment constituer un revêtement précurseur d'un revêtement antibuée. Par "précurseur d'un revêtement antibuée", on entend dans la présente demande un revêtement qui, s'il est appliqué à sa surface une solution liquide contenant un tensioactif de façon à former un film, constitue une revêtement antibuée. L'ensemble constitué par le revêtement précurseur et le film de solution à base de surfactant constitue le revêtement antibuée proprement dit. Par "revêtement antibuée", on entend dans la présente demande un revêtement qui, lorsqu'un substrat en verre transparent revêtu de ce revêtement est placé dans les conditions générant de la buée sur ledit substrat non équipé dudit revêtement, présentées en partie expérimentale dans le paragraphe « Test de la vapeur chaude », permet immédiatement une acuité visuelle > 6/10$^{ème}$ pour un observateur observant à travers le verre revêtu une échelle d'acuité visuelle située à 5 mètres de distance.

L'obtention de surfaces hydrophiles comportant des groupes polyoxyalkylène greffés et de précurseurs de revêtements antibuée est décrite en détail dans la demande WO 2011/080472. Une telle surface peut être obtenue par application d'une composition comprenant un hydrolysat du composé organosilane possédant un groupe polyoxyalkylène (comprenant de préférence moins de 80 atomes de carbone) et au moins un atome de silicium porteur d'au moins un groupe hydrolysable. Il s'agit préférentiellement d'un composé de formule :

$$R^1Y_mSi(X)_{3-m} \qquad (I)$$

dans laquelle les groupes Y, identiques ou différents, sont des groupes organiques monovalents liés au silicium par un atome de carbone, les groupes X, identiques ou différents, sont des groupes hydrolysables, $R^1$ est un groupe comprenant une fonction polyoxyalkylène, m est un entier égal à 0, 1 ou 2. De préférence m = 0. Un exemple d'un tel composé est le 2-[méthoxy(polyéthylèneoxy)propyl]triméthoxysilane possédant 6 à 9 unités oxyde d'éthylène, de formule $CH_3O\text{-}(CH_2CH_2O)_{6\text{-}9}\text{-}(CH_2)_3Si(OCH_3)_3$ (III).

Le dépôt du composé organosilane possédant un groupe polyoxyalkylène et au moins un atome de silicium porteur d'au moins un groupe hydrolysable est préférentiellement réalisé en phase gazeuse, de préférence par évaporation, suivie d'un greffage.

Des tensioactifs particulièrement bien adaptés pour conférer des propriétés antibuée à des surfaces hydrophiles sont les esters d'acides gras de polyoxyalkylène sorbitane et les monoéthers d'alkyle de polyéthylène glycols, tels que définis précédemment. Ces monoéthers sont de préférence non fluorés.

L'application du tensioactif à la surface du substrat, qui forme de préférence un revêtement antibuée, abaisse généralement l'angle de contact statique avec l'eau de cette surface à 10° ou moins, de préférence à 5° ou moins.

L'invention concerne en outre un procédé pour nettoyer un article possédant une surface externe hydrophile ou hydrophobe, comprenant l'essuyage de ladite surface au moyen d'une lingette sèche telle que définie dans la présente description. Par « surface hydrophobe », on entend une surface ayant un angle de contact statique avec l'eau supérieur ou égal à 70°, de préférence supérieur ou égal à 90°. Ce type de surface se nettoie plus facilement au moyen des lingettes sèches imprégnées selon l'invention, c'est-à-dire en réalisant un nombre de sollicitations d'essuyage inférieur pour parvenir au même niveau de nettoyage.

Le procédé de nettoyage selon l'invention est particulièrement adapté pour le nettoyage d'un article dont la surface externe est souillée par du sébum. Dans ce procédé de nettoyage, la surface externe de l'article a de préférence un angle de contact statique avec l'eau supérieur ou égal à 70°.

De façon surprenante, il a été constaté que les lingettes selon l'invention, bien qu'imprégnées par un tensioactif à des concentrations pouvant être élevées, étaient capables d'éliminer les salissures présentes sur une surface, par essuyage, tout en conférant à la surface traitée des propriétés antibuée durables, alors que l'on s'attendait à ce que la présence du tensioactif au sein du réseau de microfibres nuise à la capacité nettoyante de la lingette en limitant l'accès des salissures aux microfibres. Il a d'ailleurs été constaté que la performance nettoyante des lingettes sèches imprégnées selon l'invention était supérieure à celle des mêmes lingettes non imprégnées de tensioactif.

Des tensioactifs particulièrement bien adaptés pour réaliser le nettoyage de surfaces au moyen de lingettes

selon l'invention sont les esters d'acides gras de polyoxyalkylène sorbitane et les monoéthers d'alkyle de polyéthylène glycols, tels que définis précédemment, en particulier lorsque la surface à nettoyer est de nature hydrophile. De préférence, le tensioactif utilisé pour imprégner les lingettes selon l'invention en vue de la mise en oeuvre d'un procédé de nettoyage d'une surface hydrophobe n'est pas un tensioactif fluoré. De préférence, il ne s'agit pas, dans ce mode de réalisation, d'un tensioactif de formule $F(CF_2)_y-(CH_2-CH_2O)_{x+i}H$ (VIII), dans laquelle x est un entier variant de 1 à 14, y est un entier inférieur ou égal à 10, les composés de formule (VIII) pour lesquels y= 6 représentant au moins 90% en masse des composés de formule (VIII) présents dans la composition. De préférence, il ne s'agit pas non plus, dans ce mode de réalisation, d'un tensioactif de formule $F(CF_2)_y-(CH_2-CH_2O)_{x+1}H$ (VIII), dans laquelle x est un entier variant de 2 à 14, y est un entier inférieur ou égal à 10, les composés de formule (VIII) pour lesquels y= 6 représentant au moins 90% en masse des composés de formule (VIII) présents dans la composition.

Les surfaces traitées par les lingettes selon l'invention en vue d'un nettoyage et/ou de l'obtention de propriétés antibuée peuvent être des surfaces en verre ou en matière plastique (verre organique ou minéral), telles que des surfaces d'appareils optiques (lentilles optiques, notamment ophtalmiques, télescopes, appareils photo), de miroirs et de vitrages dans le domaine du bâtiment ou de l'automobile.

Comme énoncé précédemment, les procédés de l'invention excluent l'utilisation d'une lingette comprenant un tissu en microfibres sec obtenu par i) imprégnation d'un tissu en microfibres comprenant des microfibres faites de polymères ou de mélanges de polymères comprenant des unités polyester et des unités polyamide, avec une composition de tensioactif contenant au moins un tensioactif de formule $F(CF_2)_y-(CH_2-CH_2O)_{x+i}H$ (VIII), dans laquelle x est un entier variant de 1 à 14, y est un entier inférieur ou égal à 10, les composés de formule (VIII) pour lesquels y= 6 représentant au moins 90% en masse des composés de formule (VIII) présents dans la composition, puis ii) séchage de ce tissu en microfibres, et excluent l'utilisation d'une lingette comprenant un tissu en microfibres sec obtenu par i) imprégnation d'un tissu en microfibres comprenant des microfibres faites de polymères ou de mélanges de polymères comprenant des unités polyester et des unités polyamide, avec une composition de tensioactif contenant au moins un tensioactif de formule $F(CF_2)_y-(CH_2-CH_2O)_{x+i}H$ (VIII), dans laquelle x est un entier variant de 2 à 14, y est un entier inférieur ou égal à 10, les composés de formule (VIII) pour lesquels y= 6 représentant au moins 90% en masse des composés de formule (VIII) présents dans la composition, puis ii) séchage de ce tissu en microfibres.

L'invention a également trait à un ensemble comprenant une lingette telle que décrite dans la présente description et une paire de lunettes comprenant des verres ayant un substrat dont la surface externe présente un angle de contact statique avec l'eau inférieur à 50°. Ce substrat est de préférence revêtu d'un revêtement précurseur d'un revêtement antibuée, présentant un angle de contact statique avec l'eau inférieur à 50°, obtenu par greffage d'au moins un composé possédant un groupe polyoxyalkylène. Comme cela a été vu précédemment, ce composé est de préférence un composé organosilane comprenant moins de 80 atomes de carbone et comprenant au moins un atome de silicium porteur d'au moins un groupe hydrolysable.

Les exemples suivants illustrent l'invention de façon plus détaillée mais non limitative.

## EXEMPLES

### 1. Matériaux et articles d'optique utilisés

Les lingettes utilisées dans les exemples sont constituées de tissu Cémoi™, fabriqué par la société KB Seiren et commercialisé par la société Facol sous forme non imprégnée sous la référence Microfibre M8405 30x40 (160 g / $m^2$, norme EN 12127). Le tissu Cémoi™ est composé de 69,5 % de polyester (PES) et de 30,5 % de polyamide (norme ISO 1893). Ses différentes caractéristiques sont les suivantes : épaisseur 0,56 mm (norme ISO 5084), densité 284 $kg/m^3$, liage interlock, jauge E44, 900 mailles / $cm^2$ (norme NF EN 14971), nombre de mailles / cm 30,5 dans les colonnes et 29,5 dans les rangées (norme NF EN 14971), longueur du fil (LFA), aux 100 mailles 14 cm (norme NF EN 14970), titre du fil principal 56,1 dtex (norme NF G 07 316), nombre de microfibres ou filaments en section $\geq$ 200 filaments PES (fil de 25 brins bicomposants : 8 filaments en PES par brin ), géométrie du brin : fibre bicomposante type Pie Wedge (16 segments), diamètre moyen des microfibres : 6,5 $\mu$m, microfibres PES triangulaires (Microscope MEB).

Des lingettes imprégnées de format 12 cm x 15 cm ont été préparées à partir d'échantillons de différents textiles en microfibres que l'on a soumis à un foulardage à bain unique pour réaliser leur imprégnation puis à un séchage thermique de 3 minutes dans une étuve à 120°C. Cette technique, qui comprend une étape de pression du textile entre des rouleaux après son imprégnation dans une solution aqueuse de tensioactif, permet une imprégnation en profondeur et évite que le textile ne s'égoutte à l'issue de son traitement. Les bains de tensioactifs comprenaient 5 % en masse de tensioactif dans une solution comprenant un mélange eau désionisée/alcool isopropylique 80/20 en volume.

Les différents tensioactifs ayant été évalués sont les suivants :

a) Le Zonyl® FSO 100 (N° CAS 65545-80-4, DuPont) est un mélange de composés de formule (VIII) dans laquelle y prend les valeurs 6, 8 et 10 dans les proportions massiques respectives de l'ordre de 65%, 30%, 5% et x est un

entier variant de 2 à 13.

b) Le Tween® 40, ou de monopalmitate de polyoxyéthylène (20) sorbitane (N° CAS 9005-66-7), est un composé de formule X (représentée plus haut) dans lequel R' = $C_{15}H_{31}$ et w+x+y+z = 20.

c) Le EBrij® C10 (anciennement EBrij® 56 ou hexadécyl éther de polyéthylène glycol (N° CAS 9004-95-9, ICI), est un composé de formule $H(OCH_2CH_2)_nOR^1$ (IV) dans lequel n ~ 10 et $R^1$ = n-$C_{16}H_{33}$.

Trois types de verres ont été utilisés. Les verres notés A sont identiques à ceux décrits dans la partie expérimentale de la demande WO 2012/153072 et comportent en tant que couche externe un revêtement précurseur de revêtement antibuée à base du composé siloxane 2-[méthoxy(polyéthylèneoxy)propyl]triméthoxysilane possédant 6 à 9 unités oxyde d'éthylène de formule III et de masse molaire 450-600 g/mol (CAS No. : 65994-07-2, Ref : SIM6492.7, fourni par la société Gelest, Inc.), hormis le fait qu'il s'agit ici de lentilles ophtalmiques de rayon de courbure de 80 mm à 180 mm sans puissance (même rayon de courbure en face convexe et concave) (dits verres plans) et qu'à la fin de l'évaporation du composé de formule III, la surface de chaque lentille a été essuyée avec un tissu Cémoi sec jusqu'à ce que le surplus de composé siloxane de formule III déposé soit évacué (comme décrit dans la demande WO 2011/080472). Les revêtements précurseurs de revêtement antibuée obtenus ont une épaisseur de 1-3 nm.

Les verres notés B sont identiques aux verres A, à l'exception de leur couche externe qui est un revêtement antisalissure de 2 à 3 nm d'épaisseur obtenu par évaporation sous vide du composé OF210™ commercialisé par la société Optron (au lieu d'un précurseur de revêtement antibuée).

Les verres notés C sont identiques aux verres A, à l'exception de leur couche externe qui est un revêtement antisalissure de 3 nm d'épaisseur obtenu par évaporation sous vide du composé Optool DSX™ commercialisé par la société Daikin Industries (au lieu d'un précurseur de revêtement antibuée).

2. Evaluation des propriétés antibuée des lingettes selon l'invention

a) Protocole d'application du tensioactif à la surface des verres par essuyage au moyen d'une lingette imprégnée de tensioactif

Les verres utilisés dans les tests antibuée sont des verres A, à surface hydrophile. Les verres sont tout d'abord nettoyés soigneusement avec une solution d'eau savonneuse puis essuyés avec un tissu Cémoi™ sec. Dans un second temps, les deux faces des verres sont essuyées avec une lingette en tissu Cémoi™ imprégnée de tensioactif (30 % en masse) en effectuant un mouvement en spirale du centre vers le bord avec la lingette, de façon à les « charger » en tensioactif. Ceci correspond à une application. Différents niveaux d'application peuvent être réalisés, par exemple 5, 10 ou 20 applications.

b) Test de la vapeur chaude

Tous les tests vapeur ont été réalisés sur un panel de 5 verres traités avec une lingette imprégnée de 30 % de tensioactif en masse. Avant le test, les verres sont placés 24 heures dans un environnement régulé en température (20-25°C) et à humidité de 40 à 50%. Puis, les verres sont placés 15 secondes au dessus d'un récipient chauffé contenant de l'eau à 52°C. Immédiatement après, une échelle d'acuité visuelle située à 5 m est observée à travers le verre testé. L'observateur évalue l'acuité visuelle en fonction du temps et suivant les critères suivants :

0. Pas de buée, pas de distorsion visuelle (acuité visuelle = $10/10^{ème}$)
1. Buée et/ou distorsion visuelle permettant une acuité visuelle > $6/10^{ème}$
2. Buée et/ou distorsion visuelle permettant une acuité visuelle < $6/10^{ème}$

Concrètement, pour obtenir la note 0 ou 1, un porteur ayant une vision de 10/10 et ayant le verre placé devant son oeil doit être capable de distinguer l'orientation des lettres "E" sur la ligne 6/10 du tableau Optotype de Snellen placé à 5 mètres.

Ce test permet de simuler les conditions de vie courante où un porteur place son visage au dessus de son thé, café ou d'une casserole d'eau bouillante. Si les verres obtiennent une note de 0 ou 1 , on vérifie sous lampe Waldmann qu'ils sont totalement secs, puis on effectue à nouveau le test vapeur.

La stabilité dans le temps du revêtement antibuée a également été évaluée, à raison d'un embuage par jour. Pendant le temps d'attente, les verres sont stockés à température ambiante dans une boîte. Les résultats sont présentés dans le tableau ci-dessous :

| Tissu | | Nombre d'applications du tensioactif | | | Tenue dans le temps d'une application | | | | | |
|---|---|---|---|---|---|---|---|---|---|---|
| Cémoi™ | Tensioactif | 5 | 10 | 15 | J+1 | J+2 | J+3 | J+4 | J+5 | J+6 |
| Cémoi™ | Tween 40 | 0 | - | - | 0 | 1 | 1 | - | - | 2 |
| Cémoi™ | Brij C10 | 0 | - | - | 0 | 0 | 1 | - | - | 2 |

On constate qu'un faible nombre d'applications de tensioactif permet de bénéficier de propriétés antibuée.

c) Tests en conditions dites tropicales et hiver

Ces tests ont été réalisés en utilisant le système de détermination de la performance antibuée d'un article d'optique transparent qui est décrit de façon détaillée dans la demande FR 2974904 et qui est représenté sur la figure 1 de cette demande de brevet, où il est numéroté (20). Un verre réussit le test lorsqu'il obtient un coefficient de netteté N ≥ 0,6. En revanche, un verre échoue à ce test lorsqu'il obtient un coefficient de netteté N < 0,6. Le coefficient de netteté N est défini dans la demande FR 2974904.

Conditions hiver

Les verres ont été conservés 60 minutes en conditions dites hiver (à 0°C ou -10°C) et ensuite rapidement soumis à des conditions normales (20°C, 50 % d'humidité). Les résultats sont présentés dans le tableau ci-dessous :

| Tissu | Tensioactif | 0°C | -10°C |
|---|---|---|---|
| Cémoi™ | Tween 40™ | Succès pour 3/3 verres | Succès pour 3/3 verres |
| Cémoi™ | Brij C10™ | Succès pour 2/3 verres | Non testé |

Conditions tropicales

Les verres ont été conservés 30 minutes en conditions normales (20°C, 45 % d'humidité) et ensuite rapidement soumis à des conditions dites tropicales 30°C, 70 % d'humidité). Tous les verres testés ont réussi ces tests (tensioactifs évalués : Tween 40 et Brij C10).

3. Evaluation des propriétés nettoyantes des lingettes selon l'invention

a) Description du test de nettovabilité

Le test est effectué dans une pièce régulée en température à 22°C +/- 3°C et à un taux d'humidité ambiante de 50% +/-10%. Les verres sont tout d'abord nettoyés soigneusement avec une solution d'eau savonneuse, puis rincés à l'alcool isopropylique, puis par de l'eau désionisée et enfin essuyés avec un tissu Cémoi™ sec. Dans un second temps, une empreinte de salissure artificielle est déposée sous forme de cercles ou sillons concentriques par tampographie sur la surface convexe des verres, équipée d'un revêtement antisalissure (verres B et C) ou d'un précurseur de revêtement antibuée (verres de lunettes A), de façon à atteindre un taux de diffusion H - 8-9 pour tous les verres (soit deux dépôts pour la surface hydrophile (verres de lunettes A) et les verres de lunettes B dont la surface a été traitée par l'OF210™ et 3 à 4 dépôts pour la surface traitée avec l'Optool DSX™ (verres de lunettes C). La salissure artificielle (sébum artificiel) utilisée dans ce test comprend comme constituant principal l'acide oléique et se présente sous la forme d'une tache de 20 mm de diamètre.

Les verres sont alors soumis à un essuyage automatique à l'aide du tissu en microfibre imprégné à évaluer, fixé à un robot mécanique, sous une charge de 750 g (mouvement de va et vient parfaitement reproductible). Une sollicitation d'essuyage correspond à un aller ou un retour du tissu. Le débattement total lors du mouvement du tissu sur la lentille est de 40 mm, soit 20 mm de part et d'autre d'un point centré sur la salissure. Le textile à évaluer est toujours appliqué dans le même sens contre le verre. Le mouvement partant du centre lors du 1$^{er}$ mouvement et la valeur de 2 qui est mentionnée lors du tout premier déplacement est en fait de 1,5.

La valeur du taux de diffusion en transmission (Haze, noté H) à travers la lentille est mesurée avec un appareil Hazeguard XL 211 Plus, première mesure effectuée au centre du verre sur la zone du sillon de sébum, puis après un

nombre de sollicitations d'essuyage égal à 2, 5, 10, 20 ou 30. Pour chaque type de textile, la valeur indiquée dans les tableaux de mesure ci-dessous est une moyenne de mesures effectuées sur trois verres, chacun sali initialement comme indiqué ci-dessus et que l'on soumet successivement au cycle d'essuyage 2, 5, 10, 20, 30 (les valeurs mentionnées sont des valeurs cumulées depuis le début des essuyages), en conservant le même tissu pour les trois verres. Les tableaux indiquent également le pourcentage (cumulé) d'efficacité d'essuyage après chaque nombre de sollicitations appliquées. Ainsi, à titre d'exemple, une efficacité d'essuyage de 50 % est obtenue lorsque le nombre de sollicitations réalisées permet de diviser par 2 le taux de diffusion initial mesuré après l'application de la salissure artificielle (~ 8-9).

Le taux de diffusion H est obtenu conformément à la norme ASTM D1003 *"Standard test method for haze and luminous transmittance of transparent plastics",* en mesurant simultanément la quantité totale de lumière transmise par le verre (I totale) et la quantité de lumière diffuse, en transmission (I diffuse : quantité de lumière transmise et déviée d'un angle supérieur à 2.5° par rapport à la direction normale) :

$$\mathrm{H}(\%) = \frac{I\ diffuse}{I\ totale} \times 100$$

Le test de nettoyabilité permet notamment de déterminer le nombre d'essuyages nécessaire pour établir un taux de diffusion H inférieur ou égal à 0,5 %, qui correspond à un niveau de propreté satisfaisant du verre.

b) Exemples de mises en oeuvre de lingettes selon l'invention pour nettoyer des verres présentant différentes propriétés de surface

b.1) Exemples sur une surface hydrophile

Les verres utilisés pour ce test sont les verres A, comportant en tant que couche externe un précurseur de revêtement antibuée (couche externe hydrophile). Les résultats sont présentés dans le tableau ci-dessous et, pour ce qui est du taux de diffusion, également sous forme d'histogrammes sur la figure 1 :

| Nombre de sollicitations | 0 | 2 | 5 | 10 | 20 | 30 | 0 | 2 | 5 | 10 | 20 | 30 |
|---|---|---|---|---|---|---|---|---|---|---|---|---|
| **Verres A** | **Taux de diffusion (%)** | | | | | | **% d'efficacité d'essuyage** | | | | | |
| Lingette Cemoi™ non imprégnée (Comparatif) | 8,7 | 4,3 | 1,7 | 0,6 | 0,3 | 0,3 | 0,0 | 50,6 | 80,5 | 93,1 | 96,6 | 96,6 |
| Lingette Cemoi™ + 30 % BrijC10™ | 8,8 | 4,0 | 1,1 | 0,3 | 0,2 | 0,2 | 0,0 | 54,6 | 87,8 | 96,2 | 97,7 | 98,3 |
| Lingette Cemoi + 30 % Tween 40™ | 8,8 | 2,5 | 0,5 | 0,2 | 0,2 | 0,1 | 0,0 | 72,0 | 94,0 | 97,5 | 98,2 | 98,4 |
| Lingette Cemoi™ + 15 % Zonyl FSO 100™ | 9,0 | 2,6 | 0,4 | 0,2 | 0,1 | 0,1 | 0,0 | 70,9 | 95,2 | 98,3 | 99,1 | 99,2 |
| Lingette Cemoi™ + 30 % Zonyl FSO 100™ | 9,0 | 2,1 | 0,3 | 0,1 | 0,1 | 0,1 | 0,0 | 77,1 | 97,0 | 98,7 | 99,2 | 99,3 |

On constate que les lingettes selon l'invention exercent une action de nettoyage considérablement plus importante sur une surface hydrophile (verre A) que la même lingette non chargée en tensioactifs et que le Tween 40 et le Zonyl FSO 100 sont plus performants que le Brij C10.

b.2) Nettovabilité d'une surface hydrophobe

Les verres utilisés pour ce test sont les verres B et C, comportant en tant que couche externe un revêtement antisalissure (couche externe hydrophobe). Les résultats sont présentés dans les tableaux ci-dessous et, pour ce qui est du taux de diffusion, également sous forme d'histogrammes sur la figure 2 (verres B) et la figure 3 (verres C) :

| Nombre de sollicitations | 0 | 2 | 5 | 10 | 20 | 30 | 0 | 2 | 5 | 10 | 20 | 30 |
|---|---|---|---|---|---|---|---|---|---|---|---|---|
| Verres B | Taux de diffusion (%) | | | | | | % d'efficacité d'essuyage | | | | | |
| Lingette Cemoi™ non imprégnée (comparatif) | 8,3 | 1,9 | 0,3 | 0,1 | 0,1 | 0,0 | 0,0 | 77,7 | 96,5 | 98,7 | 99,2 | 99,5 |
| Lingette Cemoi™ + 30 % Brij C10™ | 8,0 | 0,7 | 0,2 | 0,1 | 0,1 | 0,1 | 0,0 | 91,3 | 97,8 | 98,6 | 99,0 | 98,9 |
| Lingette Cemoi™ + 30 % Tween 40™ | 7,7 | 0,7 | 0,1 | 0,1 | 0,1 | 0,1 | 0,0 | 91,0 | 98,1 | 98,5 | 98,6 | 98,3 |

| Nombre de sollicitations | 0 | 2 | 5 | 10 | 20 | 30 | 0 | 2 | 5 | 10 | 20 | 30 |
|---|---|---|---|---|---|---|---|---|---|---|---|---|
| Verres C | Taux de diffusion | | | | | | % d'efficacité d'essuyage | | | | | |
| Lingette Cemoi™ non imprégnée (comparatif) | 8,2 | 0,4 | 0,2 | 0,1 | 0,1 | 0,1 | 0,0 | 95,3 | 97,8 | 98,7 | 99,2 | 99,2 |
| Lingette Cemoi™ + 30 % Brij C10™ | 8,0 | 0,3 | 0,2 | 0,1 | 0,1 | 0,1 | 0,0 | 96,2 | 97,3 | 98,6 | 98,3 | 98,5 |
| Lingette Cemoi™ + 30 % Tween 40™ | 7,9 | 0,2 | 0,1 | 0,1 | 0,1 | 0,1 | 0,0 | 97,8 | 98,3 | 98,6 | 98,2 | 98,3 |

On constate que sur les surfaces hydrophobes B et C, les lingettes selon l'invention comportant des surfactants Tween 40 et Brij C10 améliorent les performances nettoyantes de la lingette.

## Revendications

1. Lingette sèche comprenant un tissu en microfibres tissé ou tricoté imprégné d'au moins un tensioactif, **caractérisée en ce que** :

   - le tensioactif a un équilibre hydrophile/lipophile (HLB) ≥ 5,
   - le tissu en microfibres comprend des microfibres de polymère hydrophile et des microfibres de polymère lipophile,

   la lingette ne comprenant pas un tissu en microfibres sec obtenu par i) imprégnation d'un tissu en microfibres comprenant des microfibres faites de polymères comprenant des unités polyester et des unités polyamide ou de mélanges de polymères comprenant des unités polyester et des unités polyamide, avec une composition de tensioactif contenant au moins un tensioactif de formule $F(CF2)_y(CH_2\text{-}CH_2O)_{x+1}H$ (VIII), dans laquelle x est un entier variant de 1 à 14, y est un entier inférieur ou égal à 10, les composés de formule (VIII) pour lesquels y= 6 représentant au moins 90% en masse des composés de formule (VIII) présents dans la composition, puis ii) séchage de ce tissu en microfibres, et
   la lingette ne comprenant pas un tissu en microfibres sec obtenu par i) imprégnation d'un tissu en microfibres comprenant des microfibres faites de polymères comprenant des unités polyester et des unités polyamide ou de mélanges de polymères comprenant des unités polyester et des unités polyamide, avec une composition de tensioactif contenant au moins un tensioactif de formule $F(CF_2)_y\text{-}(CH_2\text{-}CH_2O)_{x+1}H$ (VIII), dans laquelle x est un entier variant de 2 à 14, y est un entier inférieur ou égal à 10, les composés de formule (VIII) pour lesquels y= 6 représentant au moins 90% en masse des composés de formule (VIII) présents dans la composition, puis ii) séchage de ce tissu en microfibres.

2. Lingette selon la revendication 1, **caractérisée en ce que** le tissu est imprégné par un tensioactif contenant au moins une unité siloxane Si-O et présentant une tension superficielle inférieure à 40 mN/m.

3. Lingette selon la revendication 1 ou 2, **caractérisée en ce que** le tensioactif présente un équilibre hydrophile/lipophile

(HLB) ≤ 18.

4. Lingette selon l'une quelconque des revendications précédentes, **caractérisée en ce que** le tissu en microfibres comprend des microfibres de polyamide et des microfibres de polyester.

5. Lingette selon l'une quelconque des revendications précédentes, **caractérisée en ce que** le tensioactif comporte un groupe polyoxyalkylène, de préférence un groupe polyoxyéthylène comprenant de préférence plus de 6 unités oxyéthylène.

6. Lingette selon l'une quelconque des revendications précédentes, **caractérisée en ce qu'**elle comprend au moins 5 % en masse de tensioactifs imprégnés par rapport à la masse du tissu en microfibres non imprégné, de préférence de 5 à 40 % en masse, de préférence encore de 10 à 40 % en masse, mieux de 15 % à 35 % en masse, et de façon optimale de 20 à 35 % en masse.

7. Lingette selon l'une quelconque des revendications précédentes, **caractérisée en ce que** le tissu comprend au moins 90% en masse de microfibres, de préférence au moins 95% en masse, mieux 100 % en masse de microfibres.

8. Lingette selon l'une quelconque des revendications précédentes, **caractérisée en ce que** les microfibres sont obtenues à partir de fibres de structure composite de polymère hydrophile et lipophile, par éclatement de ladite structure composite, après tissage ou tricotage.

9. Lingette selon l'une quelconque des revendications précédentes, **caractérisée en ce que** le tissu est tricoté et possède un nombre de mailles au $cm^2$ supérieur ou égal à 300.

10. Procédé pour impartir des propriétés antibuée à un article possédant une surface externe ayant un angle de contact statique avec l'eau inférieur à 50°, comprenant l'application d'un tensioactif sur ladite surface externe, par essuyage de cette surface au moyen d'une lingette sèche telle que définie dans l'une quelconque des revendications 1 à 9, comprenant ledit tissu en microfibres tissé ou tricoté imprégné dudit tensioactif.

11. Procédé selon la revendication 10, **caractérisée en ce que** la surface externe dudit article comporte des groupes polyoxyalkylène, ladite surface ayant été obtenue par greffage d'au moins un composé organosilane possédant un groupe polyoxyalkylène, de préférence comprenant moins de 80 atomes de carbone et au moins un atome de silicium porteur d'au moins un groupe hydrolysable.

12. Procédé pour nettoyer un article possédant une surface externe, comprenant l'essuyage de ladite surface externe au moyen d'une lingette sèche telle que définie dans l'une quelconque des revendications 1 à 9, ladite lingette comprenant ledit tissu en microfibres tissé ou tricoté imprégné dudit tensioactif.

13. Procédé selon la revendication 12, **caractérisé en ce que** la surface externe de l'article a un angle de contact statique avec l'eau supérieur ou égal à 70°.

14. Procédé selon l'une quelconque des revendications 10 à 13, **caractérisé en ce que** le tensioactif est un ester d'acide gras de polyoxyalkylène sorbitane ou un monoéther d'alkyle de polyéthylène glycol.

15. Procédé de préparation d'une lingette selon l'une quelconque des revendications 1 à 9, comprenant :

- l'imprégnation d'un tissu en microfibres tissé ou tricoté par une solution comprenant au moins un solvant et au moins un tensioactif ayant un équilibre hydrophile/lipophile (HLB) ≥ 5,
- le séchage du textile imprégné de façon à éliminer ledit solvant.

16. Ensemble comprenant une lingette selon l'une quelconque des revendications 1 à 9 et une paire de lunettes comprenant des verres ayant un substrat dont la surface externe présente un angle de contact statique avec l'eau inférieur à 50°.

17. Ensemble selon la revendication 16, **caractérisé en ce que** le substrat est revêtu d'un revêtement précurseur d'un revêtement antibuée, présentant un angle de contact statique avec l'eau inférieur à 50°, obtenu par greffage d'au moins un composé possédant un groupe polyoxyalkylène, de préférence polyoxyéthylène.

**18.** Ensemble selon la revendication 17, **caractérisé en ce que** le composé possédant un groupe polyoxyalkylène est un composé organosilane, de préférence remplissant les deux conditions suivantes :

- le composé organosilane comprend moins de 80 atomes de carbone, et
- le composé organosilane comprend au moins un atome de silicium porteur d'au moins un groupe hydrolysable.

**Patentansprüche**

**1.** Trockenwischtuch, das ein gewebtes oder gestricktes Mikrofasergewebe umfasst, das mit mindestens einem Tensid imprägniert ist, **dadurch gekennzeichnet, dass**:

- das Tensid ein Hydrophile-Lipophile-Gleichgewicht (HLB) ≥5 aufweist,
- das Mikrofasergewebe Mikrofasern aus einem hydrophilen Polymer und Mikrofasern aus einem lipophilen Polymer umfasst,

das Wischtuch kein trockenes Mikrofasergewebe umfasst, das durch i) das Imprägnieren eines Mikrofasergewebes, das Mikrofasern umfasst, die aus Polymeren, die Polyestereinheiten und Polyamideinheiten umfassen, oder Polymergemischen besteht, die Polyestereinheiten und Polyamideinheiten umfassen, mit einer Tensidzusammensetzung, die mindestens ein Tensid der Formel $F(CF_2)_y-(CH_2-CH_2O)_{x+1}H$ (VIII) umfasst, wobei x eine ganze Zahl von 1 bis 14 ist, y eine ganze Zahl kleiner als oder gleich 10 ist, die Verbindungen der Formel (VIII), für die y = 6 ist, mindestens 90 Gew.-% der Verbindungen der Formel (VIII) darstellen, die in der Zusammensetzung vorhanden sind, und dann ii) durch das Trocknen dieses Mikrofasertuchs erhalten wird, und

das Wischtuch kein trockenes Mikrofasergewebe umfasst, das durch i) das Imprägnieren eines Mikrofasergewebes, das Mikrofasern umfasst, die aus Polymeren, die Polyestereinheiten und Polyamideinheiten umfassen, oder Polymergemischen besteht, die Polyestereinheiten und Polyamideinheiten umfassen, mit einer Tensidzusammensetzung, die mindestens ein Tensid der Formel $F(CF_2)_y-(CH_2-CH_2O)_{x+1}H$ (VIII) umfasst, wobei x eine ganze Zahl von 2 bis 14 ist, y eine ganze Zahl kleiner als oder gleich 10 ist, die Verbindungen der Formel (VIII), für die y = 6 ist, mindestens 90 Gew.-% der Verbindungen der Formel (VIII) darstellen, die in der Zusammensetzung vorhanden sind, und dann ii) durch das Trocknen dieses Mikrofasertuchs erhalten wird.

**2.** Wischtuch nach Anspruch 1, **dadurch gekennzeichnet, dass** das Gewebe mit einem Tensid imprägniert ist, das mindestens eine Siloxaneinheit Si-O enthält und eine Oberflächenspannung von weniger als 40 mN/m aufweist.

**3.** Wischtuch nach Anspruch 1 oder 2, **dadurch gekennzeichnet, dass** das Tensid ein Hydrophile-Lipophile-Gleichgewicht (HLB) ≤18 aufweist.

**4.** Wischtuch nach einem der vorhergehenden Ansprüche, **dadurch gekennzeichnet, dass** das Mikrofasergewebe Polyamid-Mikrofasern und Polyester-Mikrofasern umfasst.

**5.** Wischtuch nach einem der vorhergehenden Ansprüche, **dadurch gekennzeichnet, dass** das Tensid eine Polyoxyalkylengruppe, vorzugsweise eine Polyoxyethyylengruppe umfasst, die vorzugsweise mehr als 6 Oxyethyleneinheiten umfasst.

**6.** Wischtuch nach einem der vorhergehenden Ansprüche, **dadurch gekennzeichnet, dass** es mindestens 5 Gew.-%, vorzugsweise 5 bis 40 Gew.-%, besonders bevorzugt 1,0 bis 40 Gew.-%, noch mehr bevorzugt 15 Gew.-% bis 35 Gew.-% und optimal 20 bis 35 Gew.-% imprägnierte Tenside, bezogen auf das Gewicht der nicht impragnierten Mikrofasern, umfasst.

**7.** Wischtuch nach einem der vorhergehenden Ansprüche, **dadurch gekennzeichnet, dass** das Gewebe mindestens 90 Gew.-% Mikrofasern, vorzugsweise mindestens 95 Gew.-%, noch mehr bevorzugt 100 Gew.-% Mikrofasern, umfasst.

**8.** Wischtuch nach einem der vorhergehenden Ansprüche, **dadurch gekennzeichnet, dass** die Mikrofasern aus Fasern aus einem hydrophilen und lipophilen Polymer mit einer Verbundstruktur durch Aufspalten der Verbundstruktur nach einem Weben oder Stricken erhalten werden.

**9.** Wischtuch nach einem der vorhergehenden Ansprüche, **dadurch gekennzeichnet, dass** das Gewebe gestrickt ist, und eine Maschenzahl pro $cm^2$ von mehr als oder gleich 300 aufweist.

10. Verfahren zur Ausstattung eines Artikels mit Antibeschlageigenschaften, der eine Außenfläche mit einem statischen Kontaktwinkel mit Wasser von weniger als 50° aufweist, welches das Auftragen eines Tensids auf die Außenfläche durch Wischen dieser Fläche mit einem Trockenwischtuch umfasst, das wie in einem der Ansprüche 1 bis 9 definiert ist, welches das gewebte oder gestrickte, mit dem Tensid imprägnierte Mikrofasergewebe umfasst.

11. Verfahren nach Anspruch 10, **dadurch gekennzeichnet, dass** die Außenfläche des Artikels Polyoxyalkylengruppen umfasst, wobei die Fläche durch das Pfropfen mindestens einer Organosilanverbindung mit einer vorzugsweise weniger als 80 Kohlenstoffatome umfassenden Polyoxyalkylengruppe und mindestens einem Siliciumatom erhalten wurde, das mindestens eine hydrolysierbare Gruppe trägt.

12. Verfahren zum Reinigen eines Artikels mit einer Außenfläche, welches das Wischen der Außenfläche mit einem Trockeriwischtuch umfasst, das wie in einem der Ansprüche 1 bis 9 definiert ist, wobei das Wischtuch das gewebte oder gestrickte, mit dem Tensid imprägnierte Mikrofasergewebe umfasst.

13. Verfahren nach Anspruch 12, **dadurch gekennzeichnet, dass** die Außenfläche des Artikels einen statischen Kontaktwinkel mit Wasser von mehr als oder gleich 70° aufweist.

14. Verfahren nach einem der Ansprüche 10 bis 13, **dadurch gekennzeichnet, dass** es sich beim Tensid um einen Polyoxyalkylensobitanfettsäureester oder einen Polyethylenglycolalkylmonoether handelt.

15. Verfahren zur Herstellung eines Wischtuchs nach einem der Ansprüche 1 bis 9, das Folgendes umfasst:

- das Imprägnieren eines gewebten oder gestrickten Mikrofasergewebes mit einer Lösung, die mindestens ein Lösungsmittel und mindestens ein Tensid mit einem Hydrophile-Lipophile-Gleichgewicht (HLB) ≥5 aufweist,
- das Trocknen des imprägnierten Textilerzeugnisses, um das Lösungsmittel zu entfernen.

16. Anordnung, die ein Wischtuch nach einem der Ansprüche 1 bis 9 und eine Brille umfasst, die Gläser mit einem Substrat umfasst, dessen Außenfläche einen statischen Kontaktwinkel mit Wasser von weniger als 50° aufweist.

17. Anordnung nach Anspruch 16, **dadurch gekennzeichnet, dass** das Substrat mit einer Vorläuferbeschichtung einer beschlaghemmenden Beschichtung beschichtet ist, die einen statischen Kontaktwinkel mit Wasser von weniger als 50° aufweist, die durch Pfropfen mindestens einer Verbindung erhalten wird, die eine Polyoxyalkylengruppe, vorzugsweise Polyoxyethylen, aufweist.

18. Anordnung nach Anspruch 17, **dadurch gekennzeichnet, dass** es sich bei der eine Polyoxyalkylengruppe aufweisenden Verbindung um eine Organosilanverbindung handelt, die vorzugsweise die beiden folgenden Bedingungen erfüllt:

- die Organosilanverbindung umfasst weniger als 80 Kohlenstoffatome und
- die Organosilanverbindung umfasst mindestens ein Siliciumatom, das mindestens eine hydrolysierbare Gruppe trägt.

## Claims

1. A dry wipe comprising a woven or knitted microfiber fabric impregnated with at least one surfactant, **characterized in that**:

- the surfactant has a hydrophilic-lipophilic balance (HLB) ≥ 5,
- the microfiber fabric comprises hydrophilic polymer microfibers and lipophilic polymer microfibers,

the wipe not comprising a dry microfiber fabric obtained by i) impregnation of a microfiber fabric comprising microfibers made of polymers comprising polyester units and polyamide units or of mixtures of polymers comprising polyester units and polyamide units, with a surfactant composition containing at least one surfactant of formula $F(CF_2)_y-(CH_2-CH_2O)_{x+1}H$ (VIII), in which x is an integer varying from 1 to 14, y is an integer less than or equal to 10, the compounds of formula (VIII) for which y= 6 representing at least 90% by weight of the compounds of formula (VIII) present in the composition, then ii) drying of this microfiber fabric, and

the wipe not comprising a dry microfiber fabric obtained by i) impregnation of a microfiber fabric comprising microfibers made of polymers comprising polyester units and polyamide units or of mixtures of polymers comprising polyester units and polyamide units, with a surfactant composition containing at least one surfactant of formula $F(CF_2)_y-(CH_2-CH_2O)_{x+1}H$ (VIII), in which x is an integer varying from 2 to 14, y is an integer less than or equal to 10, the compounds of formula (VIII) for which y= 6 representing at least 90% by weight of the compounds of formula (VIII) present in the composition, then ii) drying of this microfiber fabric,

**2.** The wipe as claimed in claim 1, **characterized in that** the fabric is impregnated by a surfactant containing at least one Si-O siloxane unit and having a surface tension of less than 40 mN/m.

**3.** The wipe as claimed in claim 1 or 2, **characterized in that** the surfactant has a hydrophilic-lipophilic balance (HLB) $\leq 18$.

**4.** The wipe as claimed in any one of the preceding claims, **characterized in that** the microfiber fabric comprises polyamide microfibers and polyester microfibers,

**5.** The wipe as claimed in any one of the preceding claims, **characterized in that** the surfactant comprises a polyoxyalkylene group. preferably a polyoxyethylene group preferably comprising more than 6 oxyethylene units.

**6.** The wipe as claimed in any one of the preceding claims, **characterized in that** it comprises at least 5% by weight of impregnated surfactants relative to the weight of the non-impregnated microfiber fabric, preferably from 5% to 40% by weight, more preferably from 10% to 40% by weight, better still from 15% to 35% by weight, and optimally from 20% to 35% by weight.

**7.** The wipe as claimed in any one of the preceding claims, **characterized in that** the fabric comprises at least 90% by weight of microfibers, preferably at least 95% by weight, better still 100% by weight of microfibers.

**8.** The wipe as claimed in any one of the preceding claims, **characterized in that** the microfibers are obtained from hydrophilic and lipophilic polymer fibers of composite structure, by splitting said composite structure, after weaving or knitting.

**9.** The wipe as claimed in any one of the preceding claims, **characterized in that** the fabric is knitted and has a number of stitches per $cm^2$of greater than or equal to 300.

**10.** A process for imparting anti-fog properties to an article having an outer surface having a static contact angle with water of less than 50°, comprising the application of a surfactant to said outer surface, by wiping this surface using a dry wipe as defined in any one of claims 1 to 9, comprising said woven or knitted microfiber fabric impregnated with said surfactant

**11.** The process as claimed in claim 10, **characterized in that** the outer surface of said article comprises polyoxyalkylene groups, said surface having been obtained by grafting at least one organosilane compound having a polyoxyalkylene group, preferably comprising less than 80 carbon atoms and at least one silicon atom bearing at least one hydrolyzable group.

**12.** A process for cleaning an article having an outer surface, comprising the wiping of said outer surface using a dry wipe as defined in any one of claims 1 to 9. said wipe comprising said woven or knitted microfiber fabric impregnated with said surfactant,

**13.** The process as claimed in claim 12, **characterized in that** the outer surface of the article has a static contact angle with water of greater than or equal to 70°.

**14.** The process as claimed in any one of claims 10 to 13, **characterized in that** the surfactant is a polyoxyalkylene sorbitan fatty acid ester or a polyethylene glycol alkyl monoether.

**15.** A process for preparing a wipe as claimed in any one of claims 1 to 9. comprising:

- the impregnation of a woven or knitted microfiber fabric by a solution comprising at least one solvent and at least one surfactant having a hydrophilic-lipophilic balance (HLB) $\geq 5$,
- the drying of the impregnated textile so as to eliminate said solvent.

**16.** An assembly comprising a wipe as claimed in any one of claims 1 to 9 and a pair of spectacles comprising lenses having a substrate, the outer surface of which has a static contact angle with water of less than 50°.

**17.** The assembly as claimed in claim 16, **characterized in that** the substrate is coated with a precursor coating of an anti-fog coating, having a static contact angle with water of less than 50°, obtained by grafting at least one compound having a polyoxyalkylene , preferably polyoxyethylene, group.

**18.** The assembly as claimed in claim 17, **characterized in that** the compound having a polyoxyalkylene group is an organosilane compound, preferably satisfying the following two conditions:

- the organosilane compound comprises less than 80 carbon atoms, and
- the organosilane compound comprises at least one silicon atom bearing at least one hydrolyzable group.

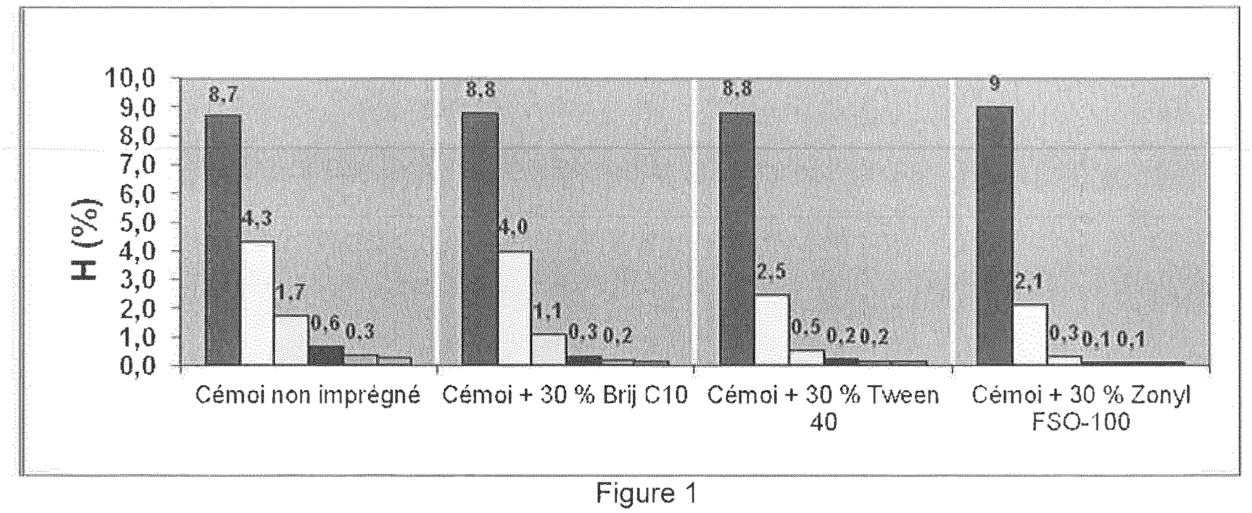


Figure 1

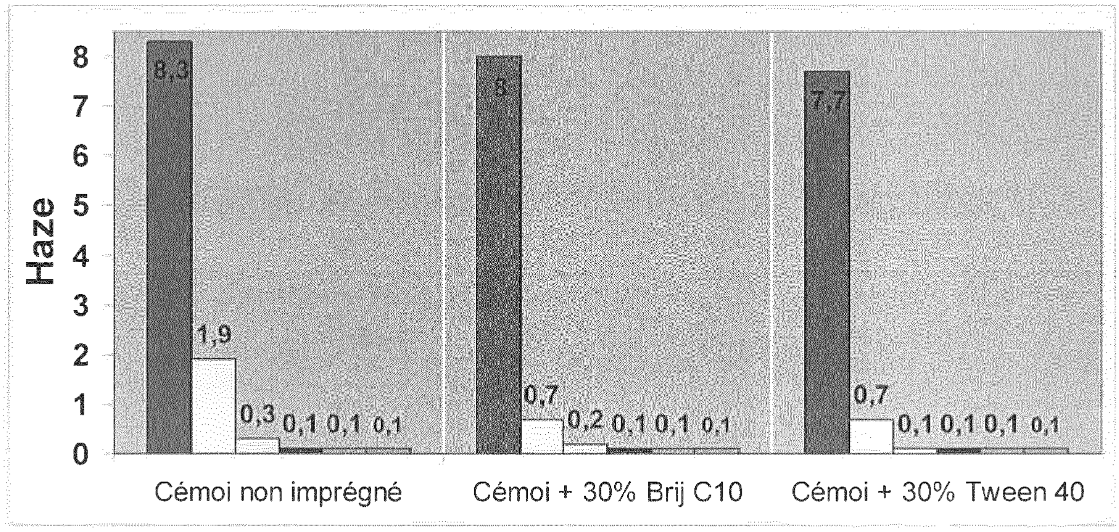


Figure 2

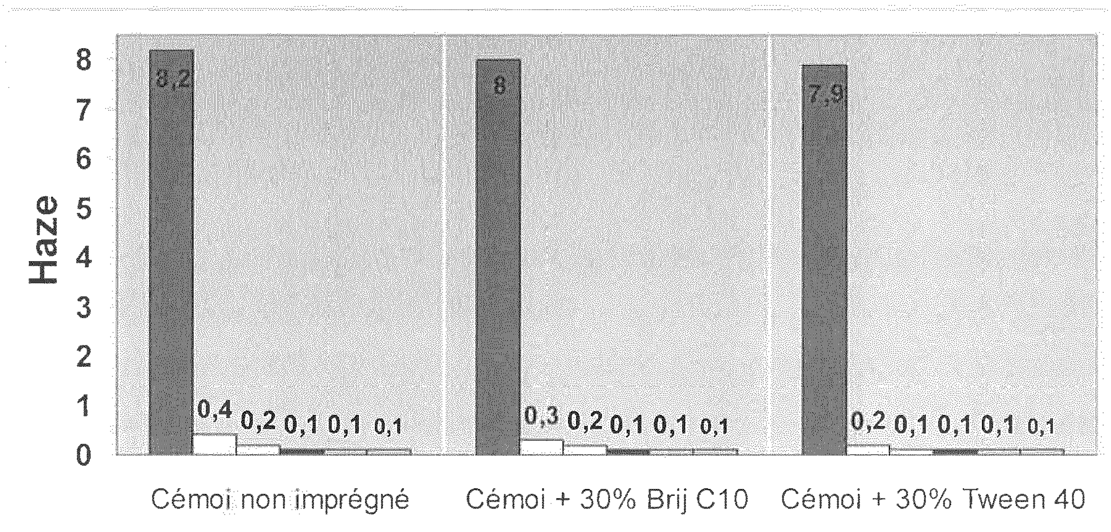


Figure 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2011080472 A
- WO 2013013929 A
- WO 2005108543 A
- JP 2009195648 A
- WO 2008053020 A
- WO 2012153072 A
- FR 2974904


### Littérature non-brevet citée dans la description


- **W. C. GRIFFIN.** *J. Soc. Cosm. Chem.,* 1954, vol. 5, 249-256
- **DAVIES J. T.** A Quantitative Kinetic Theory of Emulsion type. I. Physical Chemistry of the Emulsifying Agent. *Gas/liquid and Liquid/liquid interfaces. Proceedings of the International Congress of surface activity,* 1957, 426-438
- **Z. E.PROVERBIO ; S. M. BARDAVID ; E. L. ARANCIBIA ; P. C. SCHULZ.** Hydrophile-lipophile balance and solubility parameter of cationic surfactants. *Colloids and Surfaces A : Physicochem. Eng. Aspects,* 2003, vol. 214, 167-171